# EUROPEAN PATENT APPLICATION

(11) **EP 4 318 296 A1**
(43) Date of publication of application: **07.02.2024**
(21) Application number: 22207272.0
(22) Date of filing: 14.11.2022
(51) Int. Cl.: G06F 30/17, G06F 30/28, G06F 111/10, G06F 113/08

(54) **METHOD AND APPARATUS FOR CONSTRUCTING ONE-DIMENSIONAL HYDRODYNAMIC MODEL, ELECTRONIC DEVICE, AND STORAGE MEDIUM**

(30) Priority: 02.08.2022 CN 202210919411
(71) Applicant: China Three Gorges Co., Ltd., Wuhan Hubei 430010 (CN)
(72) Inventor: MI, Boyu, Wuhan, 430010 (CN); ZHANG, Chengxiao, Wuhan, 430010 (CN); ZHAO, Hanqing, Wuhan, 430010 (CN); REN, Shi, Wuhan, 430010 (CN); LYU, Chaonan, Wuhan, 430010 (CN); LIU, Zhiwu, Wuhan, 430010 (CN); JIANG, Dingguo, Wuhan, 430010 (CN); ZHAI, Yanwei, Wuhan, 430010 (CN); LIU, Xiaoting, Wuhan, 430010 (CN)
(74) Representative: J A Kemp LLP

(57) **Abstract**

The present application provides a method and an apparatus for constructing a one-dimensional hydrodynamic model, an electronic device, and a storage medium. The method includes: acquiring topographic data of a cross section of a riverway and hydrodynamic interpolation parameters; constructing a hydrodynamic interpolation table of the cross section of the riverway according to the topographic data and the hydrodynamic interpolation parameters, where the hydrodynamic interpolation table includes a water level-water surface width interpolation table, a water level-flow passing cross-sectional area interpolation table, a water level-hydraulic radius interpolation table, and a flow passing cross-sectional area-water level interpolation table; and constructing a one-dimensional hydrodynamic model of the riverway based on the hydrodynamic interpolation table of the cross section of the riverway. In the method provided in the foregoing solution, a one-dimensional hydrodynamic model is constructed based on a hydrodynamic interpolation table, so that the one-dimensional hydrodynamic model can determine a correspondence relationship between a cross-sectional hydraulic element and a water level in a table lookup and interpolation mode, thereby improving the calculation efficiency of the one-dimensional hydrodynamic model.

## Description

### TECHNICAL FIELD

The present application relates to the field of hydrodynamic analysis technologies, and in particular, to a method and an apparatus for constructing a one-dimensional hydrodynamic model, an electronic device, and a storage medium.

### BACKGROUND

Topographic data of a cross-section of a natural riverway is usually starting distances and heights of scattered points in a cross-sectional direction. In a one-dimensional hydrodynamic model, hydraulic elements such as a water surface width, a flow passing cross-sectional area, and a hydraulic radius that correspond to a water level need to be determined according to geometric information of these cross-sectional scattered points, or a water level is reversed by using a flow passing cross-sectional area.

In the prior art, a closed geometrical figure, that is, a flow passing cross-section, formed by water surface lines determined by a water level and connecting lines of cross-sectional topographic scattered points is usually used to calculate a water surface width, a flow passing cross-sectional area, and a hydraulic radius that correspond to the geometrical figure in a segmented accumulation manner. When a water level is determined according to a flow passing cross-sectional area, because the flow passing cross-sectional area cannot be directly converted into a geometrical figure of a flow passing cross-section, making it impossible to directly determine the water level. A trial method is usually used for a one-dimensional hydrodynamic model, flow passing cross-sectional areas corresponding to different water levels are repeatedly attempted, until the precision meets a requirement.

In the foregoing method, when there are a relatively large number of cross-sectional scattered points, a lot of segmented accumulation processes are generated, a trial cost increases correspondingly, and the one-dimensional hydrodynamic model requires repeated calling of a conversion calculation process between hydraulic elements in a plurality of riverway cross-sections, resulting in slightly low calculation efficiency of the model.

### SUMMARY

The present application provides a method and an apparatus for constructing a one-dimensional hydrodynamic model, an electronic device, and a storage medium, to resolve defects such as reduced calculation efficiency of a one-dimensional hydrodynamic model in the prior art.

According to a first aspect of the present application, a method for constructing a one-dimensional hydrodynamic model is provided, including:

acquiring topographic data of a cross section of a riverway and hydrodynamic interpolation parameters;
constructing a hydrodynamic interpolation table of the cross section of the riverway according to the topographic data and the hydrodynamic interpolation parameters, where the hydrodynamic interpolation table includes a water level-water surface width interpolation table, a water level-flow passing cross-sectional area interpolation table, a water level-hydraulic radius interpolation table, and a flow passing cross-sectional area-water level interpolation table; and
constructing a one-dimensional hydrodynamic model of the riverway based on the hydrodynamic interpolation table of the cross section of the riverway.

Optionally, the step of constructing a hydrodynamic interpolation table of the cross section of the riverway according to the topographic data and the hydrodynamic interpolation parameters includes:
constructing a basic hydrodynamic interpolation table of the cross section of the riverway according to the topographic data and the hydrodynamic interpolation parameters; and
performing sparse processing on the basic hydrodynamic interpolation table, to obtain the hydrodynamic interpolation table.

Optionally, the step of constructing a basic hydrodynamic interpolation table of the cross section of the riverway according to the topographic data and the hydrodynamic interpolation parameters includes:
constructing one slice by using every two adjacent scattered points as endpoints according to a sequence of scattered points of the cross section indicated by the topographic data, to obtain slice data corresponding to the cross section of the riverway;
for any water level represented by the hydrodynamic interpolation parameters, determining geometric information corresponding to the slice according to a numeric relationship between the water level and each of two endpoint heights of each slice represented by the slice data;
determining hydraulic element information corresponding to the slice according to the geometric information corresponding to the slice;
integrating hydraulic element information corresponding to all slices, so as to determine hydraulic element interpolation values corresponding to the water level; and
constructing the basic hydrodynamic interpolation table of the cross section of the riverway according to hydraulic element interpolation values corresponding to all water levels of the hydrodynamic interpolation parameters.

Optionally, the step of determining geometric information corresponding to the slice according to a numeric relationship between the water level and each of two endpoint heights of each slice represented by the slice data includes:
for any slice, if the two endpoint heights of the slice are both less than the water level, determining that a flow passing region of the slice has a trapezoid or rectangle shape;
if the water level is between the two endpoint heights, determining that the flow passing region of the slice has a triangle shape; and
if the two endpoint heights of the slice are both greater than or equal to the water level, determining that the flow passing region of the slice is empty.

Optionally, the step of performing sparse processing on the basic hydrodynamic interpolation table, to obtain the hydrodynamic interpolation table, includes:
performing sequential numbering on interpolation points in the basic hydrodynamic interpolation table;
choosing a number range according to sequential numbers of the interpolation points;
constructing a basic hydrodynamic interpolation table segment based on interpolation points corresponding to the number range;
determining, according to a linearity of the basic hydrodynamic interpolation table segment, whether the basic hydrodynamic interpolation table segment includes an interpolation point to be eliminated;
when any basic hydrodynamic interpolation table segment includes an interpolation point to be eliminated, eliminating the interpolation point to be eliminated, to obtain a new basic hydrodynamic interpolation table segment; and
integrating all current basic hydrodynamic interpolation table segments, to obtain the hydrodynamic interpolation table.

Optionally, the step of determining, according to a linearity of the basic hydrodynamic interpolation table segment, whether the basic hydrodynamic interpolation table segment includes an interpolation point to be eliminated includes:
constructing a linear equation of the basic hydrodynamic interpolation table segment according to two endpoints of the basic hydrodynamic interpolation table segment;
detecting a deviation between the linear equation and each interpolation point other than the endpoints in the basic hydrodynamic interpolation table segment; and
when deviations between all the interpolation points and the linear equation are all less than a preset threshold, determining that the basic hydrodynamic interpolation table segment includes interpolation points to be eliminated, and determining the interpolation points other than the endpoints in the basic hydrodynamic interpolation table segment as the interpolation points to be eliminated.

Optionally, the method further includes:
when a deviation between any interpolation point and the linear equation is not less than the preset threshold:
detecting a maximum deviation between an interpolation point and the linear equation;
determining an interpolation point corresponding to the maximum deviation as a target interpolation point; and
choosing a new number range according to a sequential number corresponding to the target interpolation point, to reconstruct a basic hydrodynamic interpolation table segment.

According to a second aspect of the present application, an apparatus for constructing a one-dimensional hydrodynamic model is provided, including:
an acquisition module, configured to acquire topographic data of a cross section of a riverway and hydrodynamic interpolation parameters;
an interpolation table construction module, configured to construct a hydrodynamic interpolation table of the cross section of the riverway according to the topographic data and the hydrodynamic interpolation parameters, where the hydrodynamic interpolation table includes a water level-water surface width interpolation table, a water level-flow passing cross-sectional area interpolation table, a water level-hydraulic radius interpolation table, and an flow passing cross-sectional area-water level interpolation table; and
a model construction module, configured to construct a one-dimensional hydrodynamic model of the riverway based on the hydrodynamic interpolation table of the cross section of the riverway.

Optionally, the interpolation table construction module is specifically configured to:
construct a basic hydrodynamic interpolation table of the cross section of the riverway according to the topographic data and the hydrodynamic interpolation parameters; and
perform sparse processing on the basic hydrodynamic interpolation table, to obtain the hydrodynamic interpolation table.

Optionally, the interpolation table construction module is specifically configured to:
construct one slice by using every two adjacent scattered points as endpoints according to a sequence of scattered points of the cross section indicated by the topographic data, to obtain slice data corresponding to the cross section of the riverway;
for any water level represented by the hydrodynamic interpolation parameters, determine geometric information corresponding to the slice according to a numeric relationship between the water level and each of two endpoint heights of each slice represented by the slice data;
determine hydraulic element information corresponding to the slice according to the geometric information corresponding to the slice;
integrate hydraulic element information corresponding to all slices, so as to determine hydraulic element interpolation values corresponding to the water level; and
construct the basic hydrodynamic interpolation table of the cross section of the riverway according to hydraulic element interpolation values corresponding to all water levels of the hydrodynamic interpolation parameters.

Optionally, the interpolation table construction module is specifically configured to:
for any slice, if the two endpoint heights of the slice are both less than the water level, determine that a flow passing region of the slice has a trapezoid or rectangle shape;
if the water level is between the two endpoint heights, determine that the flow passing region of the slice has a triangle shape; and
if the two endpoint heights of the slice are both greater than or equal to the water level, determine that the flow passing region of the slice is empty.

Optionally, the interpolation table construction module is specifically configured to:
perform sequential numbering on interpolation points in the basic hydrodynamic interpolation table;
choose a number range according to sequential numbers of the interpolation points;
construct a basic hydrodynamic interpolation table segment based on interpolation points corresponding to the number range;
determine, according to a linearity of the basic hydrodynamic interpolation table segment, whether the basic hydrodynamic interpolation table segment includes an interpolation point to be eliminated;
when any basic hydrodynamic interpolation table segment includes an interpolation point to be eliminated, eliminate the interpolation point to be eliminated, to obtain a new basic hydrodynamic interpolation table segment; and
integrate all current basic hydrodynamic interpolation table segments, to obtain the hydrodynamic interpolation table.

Optionally, the interpolation table construction module is specifically configured to:
construct a linear equation of the basic hydrodynamic interpolation table segment according to two endpoints of the basic hydrodynamic interpolation table segment;
detect a deviation between the linear equation and each interpolation point other than the endpoints in the basic hydrodynamic interpolation table segment; and
when deviations between all the interpolation points and the linear equation are all less than a preset threshold, determine that the basic hydrodynamic interpolation table segment includes interpolation points to be eliminated, and determine the interpolation points other than the endpoints in the basic hydrodynamic interpolation table segment as the interpolation points to be eliminated.

Optionally, the interpolation table construction module is further configured to:
when a deviation between any interpolation point and the linear equation is not less than the preset threshold:
detect a maximum deviation between an interpolation point and the linear equation;
determine an interpolation point corresponding to the maximum deviation as a target interpolation point; and
choose a new number range according to a sequential number corresponding to the target interpolation point, to reconstruct a basic hydrodynamic interpolation table segment.

According to a third aspect of the present application, an electronic device is provided, including: at least one processor and a memory, where
the memory stores computer executable instructions; and
the at least one processor is configured to execute the computer executable instructions stored in the memory, to cause the at least one processor to perform the method according to the foregoing first aspect and any possible design of the first aspect.

According to a fourth aspect of the present application, a computer-readable storage medium is provided, with computer executable instructions stored therein, where the computer executable instructions can be executed by a processor to implement the method according to the foregoing first aspect and any possible design of the first aspect.

The technical solution in the present application has the following advantages:

For the method and apparatus for constructing a one-dimensional hydrodynamic model, the electronic device, and the storage medium provided in the present application, topographic data of a cross section of a riverway and hydrodynamic interpolation parameters are acquired; a hydrodynamic interpolation table of the cross section of the riverway is constructed according to the topographic data and the hydrodynamic interpolation parameters, where the hydrodynamic interpolation table includes a water level-water surface width interpolation table, a water level-flow passing cross-sectional area interpolation table, a water level-hydraulic radius interpolation table, and a flow passing cross-sectional area-water level interpolation table; and a one-dimensional hydrodynamic model of the riverway is constructed based on the hydrodynamic interpolation table of the cross section of the riverway. In the method provided in the foregoing solution, a one-dimensional hydrodynamic model is constructed based on a hydrodynamic interpolation table, so that the one-dimensional hydrodynamic model can determine a correspondence relationship between a different hydraulic element and a water level in a table lookup and interpolation mode, thereby improving the calculation efficiency of the one-dimensional hydrodynamic model.

### BRIEF DESCRIPTION OF THE DRAWING

To describe the technical solutions in the embodiments of the present application or the prior art more clearly, the following briefly introduces the accompanying drawings required for describing the embodiments or the prior art. Apparently, the accompanying drawings in the following description show some embodiments of the present application, and a person of ordinary skill in the art may still derive other drawings from these accompanying drawings.
FIG 1 is a schematic structural diagram of a system for constructing a one-dimensional hydrodynamic model according to an embodiment of the present application;
FIG 2 is a schematic flowchart of a method for constructing a one-dimensional hydrodynamic model according to an embodiment of the present application;
FIG 3 is a distribution diagram of cross-sectional scattered points of a cross section of an exemplary riverway according to an embodiment of the present application;
FIG 4 is a schematic structural diagram of an exemplary slice according to an embodiment of the present application;
FIG. 5 is a schematic structural diagram of a basic hydrodynamic interpolation table segment according to an embodiment of the present application;
FIG. 6 is a comparison diagram of a basic hydrodynamic interpolation table and a hydrodynamic interpolation table according to an embodiment of the present application;
FIG. 7 is a schematic structural diagram of an apparatus for constructing a one-dimensional hydrodynamic model according to an embodiment of the present application; and
FIG. 8 is a schematic structural diagram of an electronic device according to an embodiment of the present application.

Specific embodiments of the present disclosure are shown in the accompanying drawings above, and are further described in detail below. These accompanying drawings and text description are not used to limit the scope of the concept of the present disclosure in any manner. Instead, the concept of the present disclosure is described for a person skilled in the art with reference to specific embodiments.

### DETAILED DESCRIPTION OF THE EMBODIMENTS

To make the objectives, technical solutions, and advantages of the embodiments of the present application clearer, the following clearly and completely describes the technical solutions in the embodiments of the present application with reference to embodiments of the present application and the accompanying drawings. Apparently, the described embodiments are some rather than all of the embodiments of the present application. All other embodiments obtained by persons of ordinary skill in the art based on the embodiments of the present application without creative efforts shall fall within the protection scope of the present application.

In addition, the terms such as "first" and "second" are merely for descriptive purposes and should not be construed as indicating or implying relative importance or implicitly indicating the number of technical features indicated. In the description of the foregoing embodiments, the term "plurality of" means two or more, unless specifically and specifically limited otherwise.

In the prior art, a closed geometrical figure, that is, a flow passing cross-section, formed by water surface lines determined by a water level and connecting lines of cross-sectional topographic scattered points is usually used to calculate a water surface width, a flow passing cross-sectional area, and a hydraulic radius that correspond to the geometrical figure in a segmented accumulation manner. When a water level is determined according to a flow passing cross-sectional area, because the flow passing cross-sectional area cannot be directly converted into a geometrical figure of a flow passing cross-section, making it impossible to directly determine the water level. A trial method is usually used for a one-dimensional hydrodynamic model, flow passing cross-sectional areas corresponding to different water levels are repeatedly attempted, until the precision meets a requirement. In the foregoing method, when there are a relatively large number of cross-sectional scattered points, a lot of segmented accumulation processes are generated, a trial cost increases correspondingly, and the one-dimensional hydrodynamic model requires repeated calling of a conversion calculation process between hydraulic elements in a plurality of riverway cross-sections, resulting in slightly low calculation efficiency of the model.

In view of the foregoing technical problems, for the method and apparatus for constructing a one-dimensional hydrodynamic model, the electronic device, and the storage medium provided in the embodiments of the present application, topographic data of a cross section of a riverway and hydrodynamic interpolation parameters are acquired; a hydrodynamic interpolation table of the cross section of the riverway is constructed according to the topographic data and the hydrodynamic interpolation parameters, where the hydrodynamic interpolation table includes a water level-water surface width interpolation table, a water level-flow passing cross-sectional area interpolation table, a water level-hydraulic radius interpolation table, and a flow passing cross-sectional area-water level interpolation table; and a one-dimensional hydrodynamic model of the riverway is constructed based on the hydrodynamic interpolation table of the cross section of the riverway. In the method provided in the foregoing solution, a one-dimensional hydrodynamic model is constructed based on a hydrodynamic interpolation table, so that the one-dimensional hydrodynamic model can determine a correspondence relationship between a different hydraulic element and a water level in a table lookup and interpolation mode, thereby improving the calculation efficiency of the one-dimensional hydrodynamic model.

Several specific embodiments below may be combined with each other, and the details of the same or similar concepts or processes may not be described in some embodiments. Embodiments of the present invention are described below with reference to the accompanying drawings.

First, the structure of a system for constructing a one-dimensional hydrodynamic model on which the present application is based is described.

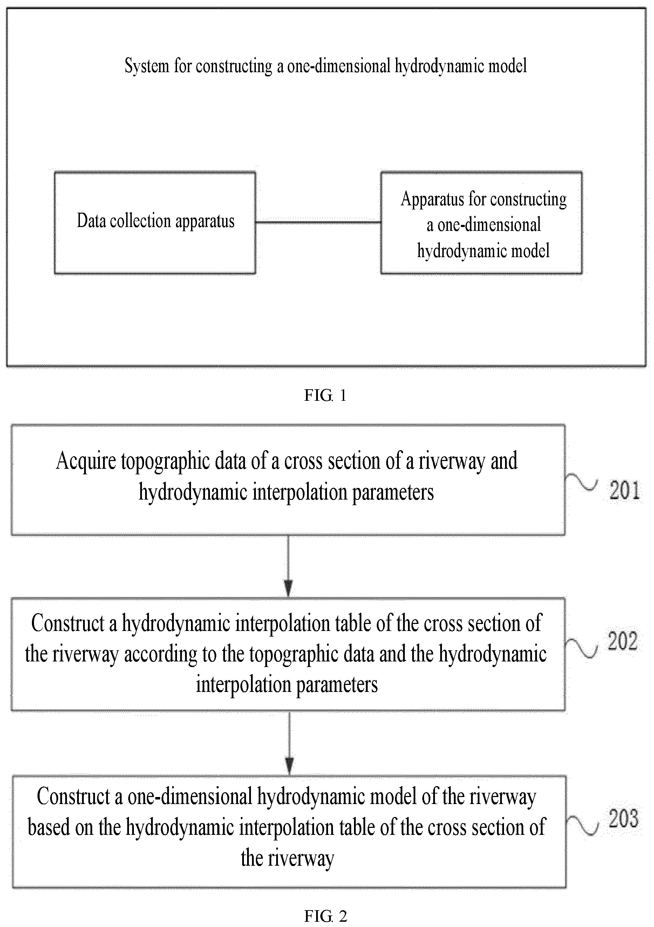

The method and apparatus for constructing a one-dimensional hydrodynamic model, the electronic device, and the storage medium provided in the embodiments of the present application are applicable to the construction of a one-dimensional hydrodynamic model of a natural riverway. FIG. 1 is a schematic structural diagram of a system for constructing a one-dimensional hydrodynamic model according to an embodiment of the present application. The system mainly includes a data collection apparatus and an apparatus for constructing a one-dimensional hydrodynamic model. Specifically, topographic data and hydrodynamic interpolation parameters of a cross section of a riverway are collected by using the data collection apparatus, and these collected data are sent to the apparatus for constructing a one-dimensional hydrodynamic model. The apparatus constructs a one-dimensional hydrodynamic model according to the obtained data.

The embodiments of the present application provide a method for constructing a one-dimensional hydrodynamic model, which is used for constructing a one-dimensional hydrodynamic model of a natural riverway. The embodiments of the present application are performed by an electronic device such as a server, a desktop computer, a notebook computer, or a tablet computer or another electronic device that can be configured to perform data processing on data related to a cross section of a riverway.

FIG. 2 is a schematic flowchart of a method for constructing a one-dimensional hydrodynamic model according to an embodiment of the present application. The method includes:

Step 201: Acquire topographic data of a cross section of a riverway and hydrodynamic interpolation parameters.

It needs to be noted that the topographic data of the cross section of the riverway includes coordinates (a starting distance Yi and a height Zi) of a series of scattered points of the cross section. The coordinates of the series of scattered points of the cross section are arranged in ascending order of starting distance. The hydrodynamic interpolation parameters include water level information and precision information, and specifically includes a minimum water level Zmin (the smallest height in the coordinates of the scattered points of the cross section by default), a maximum water level Zmax (the largest height in the coordinates of the scattered points of the cross section by default), a minimum interpolation interval dZ (0.01 m by default), and a relative interpolation precision prec (1×10⁻⁵ by default).

Step 202: Construct a hydrodynamic interpolation table of the cross section of the riverway according to the topographic data and the hydrodynamic interpolation parameters.

The hydrodynamic interpolation table includes a water level-water surface width interpolation table, a water level-flow passing cross-sectional area interpolation table, a water level-hydraulic radius interpolation table, and a flow passing cross-sectional area-water level interpolation table.

Specifically, a correspondence relationship between different water levels and a water surface width, a flow passing cross-sectional area, and a hydraulic radius may be determined according to the obtained topographic data and hydrodynamic interpolation parameters, so as to construct a water level-water surface width interpolation table, a water level-flow passing cross-sectional area interpolation table, and a water level-hydraulic radius interpolation table according to the correspondence relationship. Further, because there is a monotonically increasing relationship between a flow passing cross-sectional area and a water level, the water level-flow passing cross-sectional area interpolation table may be converted to obtain a flow passing cross-sectional area-water level interpolation table.

Step 203: Construct a one-dimensional hydrodynamic model of the riverway based on the hydrodynamic interpolation table of the cross section of the riverway.

Specifically, the one-dimensional hydrodynamic model of the riverway may be constructed by coupling hydrodynamic interpolation tables of all cross sections of the riverway and by using a conventional algorithm. The obtained one-dimensional hydrodynamic model of the riverway may determine a water surface width, a flow passing cross-sectional area, and a hydraulic radius that correspond to a water level in a table lookup and interpolation mode, and may further determine a water level corresponding to a flow passing cross-sectional area. Specifically, for how to construct the one-dimensional hydrodynamic model of the riverway by coupling the hydrodynamic interpolation tables of all the cross sections of the riverway, reference may be made to the prior art. This is not limited in the embodiments of the present application.

Based on the foregoing embodiments, in the method provided in the foregoing embodiments, a relationship table between different water levels and other hydraulic elements is mainly preestablished, and then mutual conversion between the hydraulic elements is performed in a table lookup and interpolation mode in a model calculation process, thereby increasing the overall calculation speed. However, such an interpolation method depends on an interpolation table, and the quality of the interpolation table determines the balanced performance between memory overheads, interpolation speed, and interpolation precision of the model.

At present, a construction process of an interpolation table is relatively simple, and a fixed water level interval is taken according to experience for construction. This method lacks necessary flexibility in dealing with a nonlinear function relationship between hydraulic elements caused by complex topography of a natural riverway. A small water level interval can improve the interpolation precision. However, the memory overheads are high, and the interpolation speed is correspondingly reduced. A large water level interval causes a reduced interpolation precision. The selection of a water level interval highly relies on subjective experience. As a result, a functional curve usually has an excessively large number of interpolation points in a smooth change region and an excessively small number of interpolation points in a sharp change region.

To solve the foregoing technical problem, in an implementable manner, based on the foregoing embodiments, in an embodiment, the step of constructing a hydrodynamic interpolation table of the cross section of the riverway according to the topographic data and the hydrodynamic interpolation parameters includes:

Step 2021: Construct a basic hydrodynamic interpolation table of the cross section of the riverway according to the topographic data and the hydrodynamic interpolation parameters.

Step 2022: Perform sparse processing on the basic hydrodynamic interpolation table, to obtain the hydrodynamic interpolation table.

Specifically, the basic hydrodynamic interpolation table of the cross section of the riverway may be constructed according to a preset interpolation precision and according to the correspondence relationship between different water levels and a water surface width, a flow passing cross-sectional area, and a hydraulic radius. That is, the basic hydrodynamic interpolation table is an interpolation table with a uniform density of interpolation points.

It needs to be noted that the value of the minimum interpolation interval dZ is usually small enough (for example, 0.01 m), and currently obtained four basic hydrodynamic interpolation tables may be considered as a good representation of the nonlinear function relationship between hydraulic elements of a cross-section. During actual application, the four basic hydrodynamic interpolation tables may be directly used to construct the one-dimensional hydrodynamic model of the riverway. That is, at present, a relatively common uniform-density interpolation table is used, which has the advantage that the construction process is simple. The disadvantage lies in that when dZ is excessively small, the volume of the interpolation tables increased, the memory overheads are increased, and the calculation efficiency is reduced. When dZ is increased, the interpolation precision is reduced, especially in a nonlinear obvious change section. That is, when the method of the uniform-density interpolation table is directly used, it is difficult to reach a balance among memory overheads, calculation efficiency, and interpolation precision, and there is uncertainty in the selection of a minimum interpolation interval dZ. Therefore, sparse processing should be performed on a basic hydrodynamic interpolation table with a high density, and certain interpolation precision is ensured at the same time.

Specifically, the smooth change region of the basic hydrodynamic interpolation table may be detected, and interpolation points in the smooth change region are appropriately eliminated, to implement the sparse processing of the basic hydrodynamic interpolation table to obtain a hydrodynamic interpolation table after the sparse processing. The eventually obtained hydrodynamic interpolation table has a nonuniform density.

Specifically, in an embodiment, one slice may be constructed by using every two adjacent scattered points as endpoints according to a sequence of scattered points of the cross section indicated by the topographic data, to obtain slice data corresponding to the cross section of the riverway. for any water level represented by the hydrodynamic interpolation parameters, geometric information corresponding to the slice is determined according to a numeric relationship between the water level and each of two endpoint heights of each slice represented by the slice data; hydraulic element information corresponding to the slice is determined according to the geometric information corresponding to the slice; hydraulic element information corresponding to all slices is integrated, so as to determine hydraulic element interpolation values corresponding to the water level; and the basic hydrodynamic interpolation table of the cross section of the riverway is constructed according to hydraulic element interpolation values corresponding to all water levels of the hydrodynamic interpolation parameters.

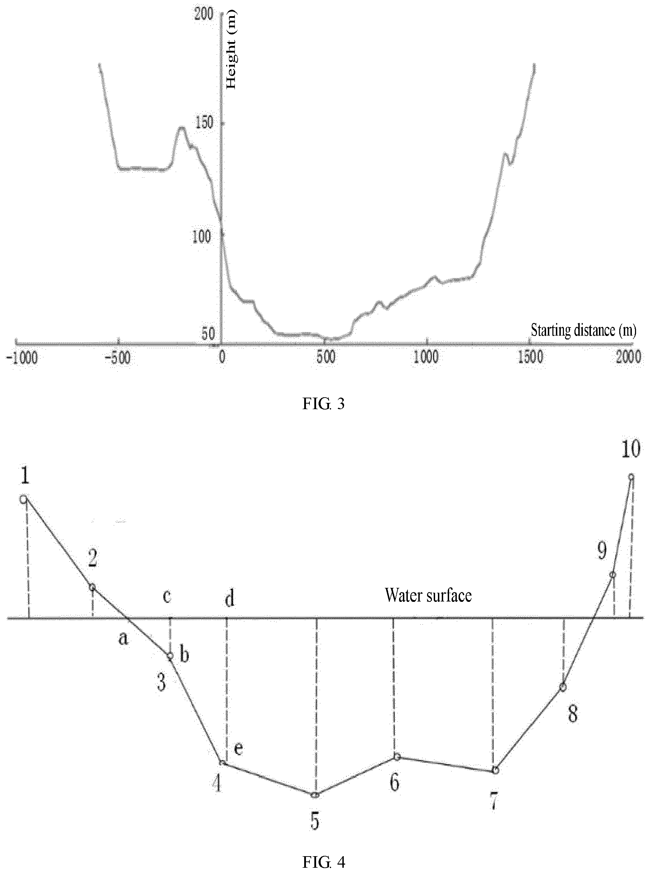

For example, FIG. 3 is a distribution diagram of cross-sectional scattered points of a cross section of an exemplary riverway according to an embodiment of the present application. The horizontal coordinate represents a starting distance, and the vertical coordinate represents a height. A distribution curve in FIG. 3 is formed by high-precision scattered points of a cross section, and a height range is [52.09,177.38]m.

Specifically, in an embodiment, one slice may be constructed by using every two adjacent scattered points as endpoints according to a sequence of the scattered points of the cross section. That is, N scattered points of the entire cross section of the riverway form N-1 slices. After a water level represented by hydrodynamic interpolation parameters is specified, according to a numeric relationship between the water level and each of two endpoint heights of each slice represented by the slice data, a relative position relationship between the water level and the slice is determined, so as to determine geometric information corresponding to the slice. The geometric information may also represent a geometric relationship between the slice and river water. Next, hydraulic element information corresponding to the slice is determined according to the geometric information. Finally, hydraulic element information corresponding to all slices is integrated by using an accumulation method, so as to obtain hydraulic element interpolation values corresponding to the water level. The rest is deduced by analogy. the basic hydrodynamic interpolation table of the cross section of the riverway is obtained by determining the hydraulic element interpolation values corresponding to all the water levels of the hydrodynamic interpolation parameters.

Specifically, in an embodiment, for any slice, if the two endpoint heights of the slice are both less than the water level, it is determined that a flow passing region of the slice has a trapezoid or rectangle shape. If the water level is between the two endpoint heights, it is determined that the flow passing region of the slice has a triangle shape. If the two endpoint heights of the slice are both greater than or equal to the water level, it is determined that the flow passing region of the slice is empty.

For example, FIG. 4 is a schematic structural diagram of an exemplary slice according to an embodiment of the present application. A slice 1 formed by scattered points 1 and 2 is a slice with two endpoint heights both greater than or equal to a water level Z, a flow passing region corresponding to the slice is empty. A slice 2 formed by scattered points 2 and 3 is a slice with two endpoint heights between which the water level Z is located, a flow passing region corresponding to the slice approximately has a triangle shape, for example, a triangle abc in the figure. A slice 3 formed by scattered points 3 and 4 is a slice with two endpoint heights both less than the water level Z, a flow passing region corresponding to the slice approximately has a trapezoid shape, for example, a trapezoid bcde.

Further, for the slice 1, a wetted perimeter, a water surface width, and a flow passing area are all recorded as 0. For the slice 2, a side length ab may be determined as a wetted perimeter of the slice 2, a side length ac may be determined as a water surface width of the slice 2, and an area of the triangle abc may be determined as a flow passing area of the slice 2. For the slice 3, a side length be may be determined as a wetted perimeter of the slice 3, a side length cd may be determined as a water surface width of the slice 3, and an area of the trapezoid bcde may be determined as a flow passing area of the slice 3. The rest is deduced by analogy. The wetted perimeter, the water surface width, and the flow passing area corresponding to each slide are determined. A total sum of the wetted perimeters of all the slices is determined as a wetted perimeter of the cross section of the riverway. A total sum of the water surface widths of all the slices is determined as a water surface width of the cross section of the riverway. A total sum of the flow passing areas of all the slices is determined as a flow passing area of the cross section of the riverway. Further, a hydraulic radius of the cross section of the riverway may be determined according to a ratio of the flow passing area to the wetted perimeter of the cross section of the riverway.

Based on the foregoing embodiments, in an implementable manner, in an embodiment, the step of performing sparse processing on the basic hydrodynamic interpolation table, to obtain the hydrodynamic interpolation table includes:
Step 20221: Perform sequential numbering on interpolation points in the basic hydrodynamic interpolation table.
Step 20222: Choose a number range according to sequential numbers of the interpolation points.
Step 20223: Construct a basic hydrodynamic interpolation table segment based on interpolation points corresponding to the number range.
Step 20224: Determine, according to a linearity of the basic hydrodynamic interpolation table segment, whether the basic hydrodynamic interpolation table segment includes an interpolation point to be eliminated.
Step 20225: When any basic hydrodynamic interpolation table segment includes an interpolation point to be eliminated, eliminate the interpolation point to be eliminated, to obtain a new basic hydrodynamic interpolation table segment.
Step 20226: Integrate all current basic hydrodynamic interpolation table segments, to obtain the hydrodynamic interpolation table.

Specifically, after the sequential numbering (1, 2, 3, ..., n) is performed on the interpolation points in the basic hydrodynamic interpolation table, a number range [istart,istop] may be selected. For the first time, a number range [1,n] may be selected. Later, a corresponding number range may be selected according to a preset number range selection rule. Specifically, the basic hydrodynamic interpolation table is divided starting from a starting point 1 according to a preset step size e, to obtain a plurality of basic hydrodynamic interpolation table segments. For example, subsequently, number ranges [1,e], [e,2e], ..., [xe,n] are sequentially selected. If istart + 1 = istop or istart = istop, it indicates that the range is excessively small, and sparse processing is not necessary.

Specifically, a basic hydrodynamic interpolation table segment may be constructed based on interpolation points corresponding to the selected number range [istart,istop]. Next, it is determined, according to a linearity of interpolation points represented by the basic hydrodynamic interpolation table segment, whether the basic hydrodynamic interpolation table segment includes an interpolation point to be eliminated. If yes, these interpolation points to be eliminated are eliminated, to implement the sparse processing of the basic hydrodynamic interpolation table segment. Finally, all current basic hydrodynamic interpolation table segments are integrated, to obtain the hydrodynamic interpolation table. The current basic hydrodynamic interpolation table segments may include both basic hydrodynamic interpolation table segments after the sparse processing and basic hydrodynamic interpolation table segments without sparse processing, that is, original basic hydrodynamic interpolation table segments.

Specifically, in an embodiment, a linear equation of the basic hydrodynamic interpolation table segment may be constructed according to two endpoints of the basic hydrodynamic interpolation table segment. A deviation between the linear equation and each interpolation point other than the endpoints in the basic hydrodynamic interpolation table segment is detected. When deviations between all the interpolation points and the linear equation are all less than a preset threshold, it is determined that the basic hydrodynamic interpolation table segment includes interpolation points to be eliminated, and the interpolation points other than the endpoints in the basic hydrodynamic interpolation table segment are determined as the interpolation points to be eliminated.

Specifically, a connecting line between two endpoints of a basic hydrodynamic interpolation table segment may be defined as an image of a linear equation of the basic hydrodynamic interpolation table segment, so as to determine the linear equation of the basic hydrodynamic interpolation table segment. If deviations between all the interpolation points other than the end points in the basic hydrodynamic interpolation table segment and the linear equation are all less than a preset threshold, that is, these interpolation points are close to the image of the linear equation, it is determined that the basic hydrodynamic interpolation table segment includes interpolation points to be eliminated, and the interpolation points other than the endpoints in the basic hydrodynamic interpolation table segment may be determined as the interpolation points to be eliminated.

Specifically, in an embodiment, when a deviation between any interpolation point and the linear equation is not less than the preset threshold, a maximum deviation between an interpolation point and the linear equation may be detected. An interpolation point corresponding to the maximum deviation is determined as a target interpolation point. A new number range is chosen according to a sequential number corresponding to the target interpolation point, to reconstruct a basic hydrodynamic interpolation table segment.

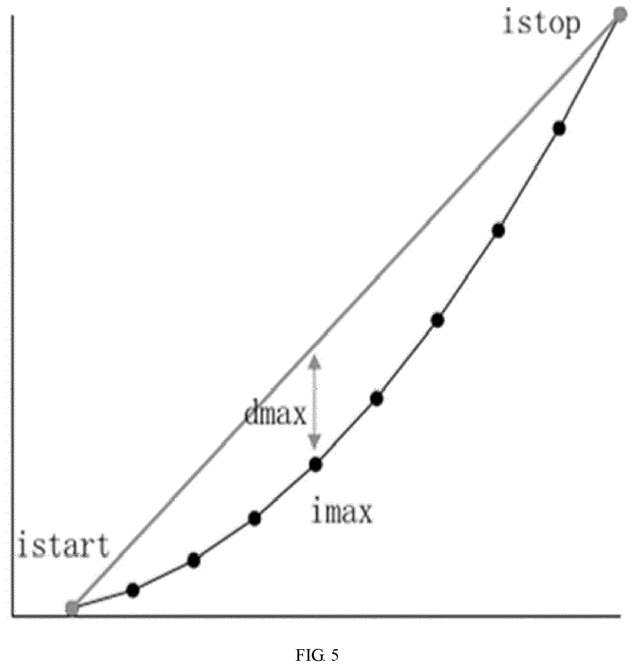

For example, FIG. 5 is a schematic structural diagram of a basic hydrodynamic interpolation table segment according to an embodiment of the present application. In the figure, an interpolation point corresponding to istart is a left endpoint of the basic hydrodynamic interpolation table segment, an interpolation point corresponding to istop is a right endpoint of the basic hydrodynamic interpolation table segment, dmax is a maximum deviation between an interpolation point and the linear equation, and an interpolation point corresponding to imax is a target interpolation point. Further, [istart,imax] or [imax,istop] may be determined as a new number range, so that a basic hydrodynamic interpolation table segment is reconstructed based on interpolation points corresponding to [imax,istop], and the foregoing procedure is repeated.

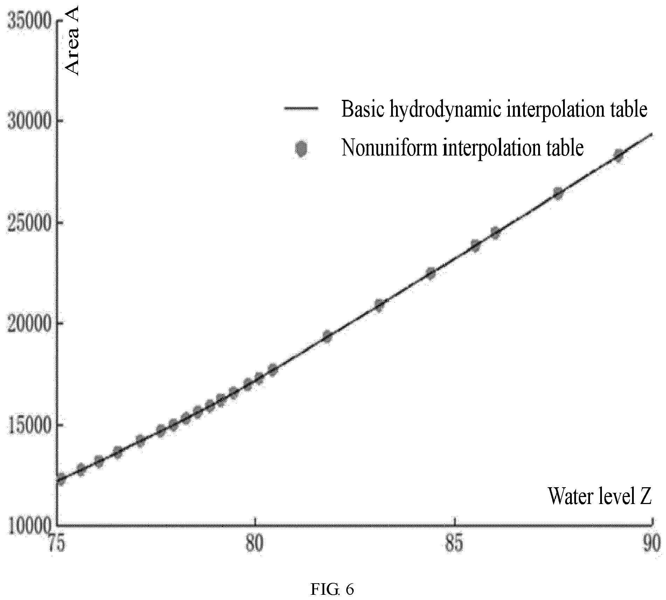

For example, FIG. 6 is a comparison diagram of a basic hydrodynamic interpolation table and a hydrodynamic interpolation table according to an embodiment of the present application. A basic interpolation table in FIG. 6 is a basic hydrodynamic interpolation table. A nonuniform interpolation table is a hydrodynamic interpolation table obtained by performing sparse processing on the basic hydrodynamic interpolation table. During actual application, for the cross section of the exemplary riverway shown in FIG. 3, , with a minimum interpolation interval of 0.01 m, a basic hydrodynamic interpolation table of a water level Z and a flow passing cross-sectional area A is constructed, to obtain 12530 interpolation points. A relatively precision of 1×10⁻⁵ is taken to perform sparse processing on the basic hydrodynamic interpolation table, to obtain a hydrodynamic interpolation table with a nonuniform density, and there are a total of 149 interpolation points. A segment is shown in FIG. 6. When a linear relationship of interpolation points is obvious (the upper right part), the interpolation points are distributed sparsely. When a nonlinear relationship is obvious (the upper right part), the interpolation points are distributed densely. As can be seen from the comparison result, through the sparse processing, only 149 interpolation points are required now to reach an interpolation precision that can only be reached by using 12530 interpolation points originally, and a loss of the interpolation precision does not exceed 0.001%. Under the premise of ensuring the interpolation precision, the memory overheads are reduced by nearly two orders of magnitude, and a quantity of searches (a bisection method) in a single time of interpolation is reduced from 13.6 times to 7.2 times on average, thereby further improving the calculation efficiency of the one-dimensional hydrodynamic model.

For the method for constructing a one-dimensional hydrodynamic model in the embodiments of the present application, topographic data of a cross section of a riverway and hydrodynamic interpolation parameters are acquired; a hydrodynamic interpolation table of the cross section of the riverway is constructed according to the topographic data and the hydrodynamic interpolation parameters, where the hydrodynamic interpolation table includes a water level-water surface width interpolation table, a water level-flow passing cross-sectional area interpolation table, a water level-hydraulic radius interpolation table, and a flow passing cross-sectional area-water level interpolation table; and a one-dimensional hydrodynamic model of the riverway is constructed based on the hydrodynamic interpolation table of the cross section of the riverway. In the method provided in the foregoing solution, a one-dimensional hydrodynamic model is constructed based on a hydrodynamic interpolation table, so that the one-dimensional hydrodynamic model can determine a correspondence relationship between a different hydraulic element and a water level in a table lookup and interpolation mode, thereby improving the calculation efficiency of the one-dimensional hydrodynamic model. In addition, sparse processing is performed on a basic hydrodynamic interpolation table to obtain a hydrodynamic interpolation table, so that a uniform interpolation precision is ensured, and a large number of unnecessary interpolation points can be omitted, so that the memory overheads are reduced, and the interpolation speed is increased. In a process of calculating a one-dimensional hydrodynamic model of a cross-section of a natural riverway, mutual conversion between hydraulic elements of the cross-section is particularly frequent. An adaptive interpolation table with a nonuniform density is used for interpolation and calculation, so that the calculation efficiency can be greatly increased, and at the same time the calculation precision can be ensured.

The embodiments of the present application provides an apparatus for constructing a one-dimensional hydrodynamic model, configured to perform the method for constructing a one-dimensional hydrodynamic model provided in the foregoing embodiment.

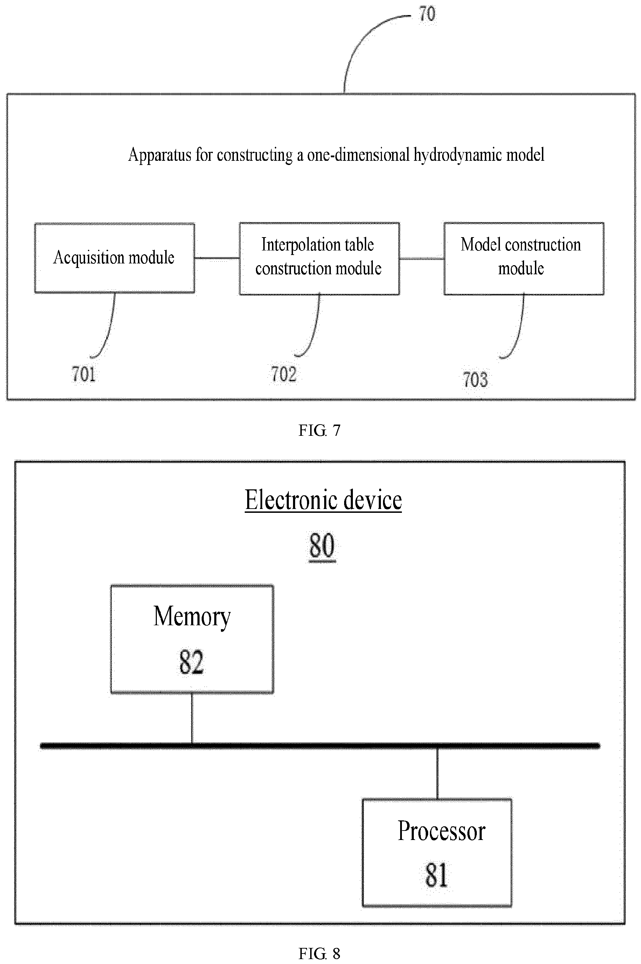

FIG. 7 is a schematic structural diagram of an apparatus for constructing a one-dimensional hydrodynamic model according to an embodiment of the present application. The apparatus 70 for constructing a one-dimensional hydrodynamic model includes an acquisition module 701, an interpolation table construction module 702, and a model construction module 703.

The acquisition module is configured to acquire topographic data of a cross section of a riverway and hydrodynamic interpolation parameters. The interpolation table construction module is configured to construct a hydrodynamic interpolation table of the cross section of the riverway according to the topographic data and the hydrodynamic interpolation parameters, where the hydrodynamic interpolation table includes a water level-water surface width interpolation table, a water level-flow passing cross-sectional area interpolation table, a water level-hydraulic radius interpolation table, and an flow passing cross-sectional area-water level interpolation table. The model construction module is configured to construct a one-dimensional hydrodynamic model of the riverway based on the hydrodynamic interpolation table of the cross section of the riverway.

Specifically, in an embodiment, the interpolation table construction module is specifically configured to:
construct a basic hydrodynamic interpolation table of the cross section of the riverway according to the topographic data and the hydrodynamic interpolation parameters; and
perform sparse processing on the basic hydrodynamic interpolation table, to obtain the hydrodynamic interpolation table.

Specifically, in an embodiment, the interpolation table construction module is specifically configured to:
construct one slice by using every two adjacent scattered points as endpoints according to a sequence of scattered points of the cross section indicated by the topographic data, to obtain slice data corresponding to the cross section of the riverway;
for any water level represented by the hydrodynamic interpolation parameters, determine geometric information corresponding to the slice according to a numeric relationship between the water level and each of two endpoint heights of each slice represented by the slice data;
determine hydraulic element information corresponding to the slice according to the geometric information corresponding to the slice;
integrate hydraulic element information corresponding to all slices, so as to determine hydraulic element interpolation values corresponding to the water level; and
construct the basic hydrodynamic interpolation table of the cross section of the riverway according to hydraulic element interpolation values corresponding to all water levels of the hydrodynamic interpolation parameters.

Specifically, in an embodiment, the interpolation table construction module is specifically configured to:
for any slice, if the two endpoint heights of the slice are both less than the water level, determine that a flow passing region of the slice has a trapezoid or rectangle shape;
if the water level is between the two endpoint heights, determine that the flow passing region of the slice has a triangle shape; and
if the two endpoint heights of the slice are both greater than or equal to the water level, determine that the flow passing region of the slice is empty.

Specifically, in an embodiment, the interpolation table construction module is specifically configured to:
perform sequential numbering on interpolation points in the basic hydrodynamic interpolation table;
choose a number range according to sequential numbers of the interpolation points;
construct a basic hydrodynamic interpolation table segment based on interpolation points corresponding to the number range;
determine, according to a linearity of the basic hydrodynamic interpolation table segment, whether the basic hydrodynamic interpolation table segment includes an interpolation point to be eliminated;
when any basic hydrodynamic interpolation table segment includes an interpolation point to be eliminated, eliminate the interpolation point to be eliminated, to obtain a new basic hydrodynamic interpolation table segment; and
integrate all current basic hydrodynamic interpolation table segments, to obtain the hydrodynamic interpolation table.

Specifically, in an embodiment, the interpolation table construction module is specifically configured to:
construct a linear equation of the basic hydrodynamic interpolation table segment according to two endpoints of the basic hydrodynamic interpolation table segment;
detect a deviation between the linear equation and each interpolation point other than the endpoints in the basic hydrodynamic interpolation table segment; and
when deviations between all the interpolation points and the linear equation are all less than a preset threshold, determine that the basic hydrodynamic interpolation table segment includes interpolation points to be eliminated, and determine the interpolation points other than the endpoints in the basic hydrodynamic interpolation table segment as the interpolation points to be eliminated.

Specifically, in an embodiment, the interpolation table construction module is further configured to:
when a deviation between any interpolation point and the linear equation is not less than the preset threshold:
detect a maximum deviation between an interpolation point and the linear equation;
determine an interpolation point corresponding to the maximum deviation as a target interpolation point; and
choose a new number range according to a sequential number corresponding to the target interpolation point, to reconstruct a basic hydrodynamic interpolation table segment.

Regarding the apparatus for constructing a one-dimensional hydrodynamic model in the this embodiment, the specific operation manners performed by the respective modules have been described in detail in the method embodiments, and will not be elaborated herein.

The apparatus for constructing a one-dimensional hydrodynamic model provided in the embodiments of the present application is configured to perform the method for constructing a one-dimensional hydrodynamic model provided in the foregoing embodiment, and has the same implementation manner and principle of the method. Details are not described again.

The embodiments of the present application provides an electronic device, configured to perform the method for constructing a one-dimensional hydrodynamic model provided in the foregoing embodiment.

FIG. 8 is a schematic structural diagram of an electronic device according to an embodiment of the present application. The electronic device 80 includes at least one processor 81 and a memory 82.

The memory stores computer executable instructions; and the at least one processor is configured to execute the computer executable instructions stored in the memory, to cause the at least one processor to perform the method for constructing a one-dimensional hydrodynamic model provided in the foregoing embodiments.

The electronic device provided in the embodiments of the present application is configured to perform the method for constructing a one-dimensional hydrodynamic model provided in the foregoing embodiment, and has the same implementation manner and principle of the method. Details are not described again.

The embodiments of the present application provide a computer-readable storage medium. The computer-readable storage medium stores computer executable instructions. The computer executable instructions are executed by a processor to perform the method for constructing a one-dimensional hydrodynamic model provided in the foregoing embodiments.

The storage medium including computer executable instructions provided in the embodiments of the present application may be configured to store computer executable instructions of the method for constructing a one-dimensional hydrodynamic model provided in the foregoing embodiments, and has the same implementation manner and principle of the method. Details are not described again.

In the several embodiments provided in the present application, it should be understood that the disclosed apparatus and method may be implemented in other forms. For example, the described apparatus embodiment is merely an example. For example, the unit division is merely logical function division and may be other division in actual implementation. In another example, a plurality of units or components may be combined or integrated into another system, or some features may be ignored or not performed. In addition, the shown or discussed mutual couplings or direct couplings or communication connections between the components may be implemented through some interfaces, indirect couplings or communication connections between the apparatuses or units, or electrical connections, mechanical connections, or connections in other forms.

The units described as separate parts may or may not be physically separate, and parts shown as units may or may not be physical units, that is, may be located in one position, or may be distributed on a plurality of network units. Some or all of the units may be selected according to actual needs to achieve the objects of the solutions in the embodiments.

In addition, functional units in the embodiments of the present application may be integrated into one processing unit, or each of the units may exist alone physically, or two or more units are integrated into one unit. The integrated unit may be implemented in the form of hardware or in the form of a hardware plus software functional unit.

The integrated unit implemented in the form of a software functional unit may be stored in a computer-readable storage medium. The software function units are stored in one storage medium, and include several instructions for instructing a computer device (which may be a personal computer, a server or a network device) or a processor to perform some steps of methods in the embodiments of the present application. The foregoing storage medium includes various media that can store program code, such as a Universal Serial Bus (USB) flash drive, a removable hard disk, a read-only memory (ROM), a random access memory (RAM), a magnetic disk or an optical disc.

It may be clearly understood by a person skilled in the art that, for the purpose of convenient and brief description, the division of the foregoing functional modules is only an example for description. During actual application, the foregoing functions may be allocated to different functional modules as required. That is, the internal structure of the apparatus is divided into different functional modules, to complete all or some functions described above. The foregoing apparatus, reference may be made to a corresponding process in the foregoing method embodiments, and details are not described herein again.

Finally, it should be noted that the foregoing embodiments are merely intended for describing the technical solutions of this application rather than limiting this application. Although the present invention is described in detail with reference to the foregoing embodiments, persons of ordinary skill in the art should understand that they may still make modifications to the technical solutions described in the foregoing embodiments or make equivalent replacements to some or all the technical features thereof, without departing from the scope of the technical solutions of the embodiments of this application.

## Claims

1. A method for constructing a one-dimensional hydrodynamic model, **characterized by** comprising:
acquiring topographic data of a cross section of a riverway and hydrodynamic interpolation parameters;
constructing a hydrodynamic interpolation table of the cross section of the riverway according to the topographic data and the hydrodynamic interpolation parameters, wherein the hydrodynamic interpolation table comprises a water level-water surface width interpolation table, a water level-flow passing cross-sectional area interpolation table, a water level-hydraulic radius interpolation table, and a flow passing cross-sectional area-water level interpolation table; and
constructing a one-dimensional hydrodynamic model of the riverway based on the hydrodynamic interpolation table of the cross section of the riverway,
wherein the step of constructing a hydrodynamic interpolation table of the cross section of the riverway according to the topographic data and the hydrodynamic interpolation parameters comprises:
constructing a basic hydrodynamic interpolation table of the cross section of the riverway according to the topographic data and the hydrodynamic interpolation parameters; and
performing sparse processing on the basic hydrodynamic interpolation table, to obtain the hydrodynamic interpolation table;
wherein the step of performing sparse processing on the basic hydrodynamic interpolation table, to obtain the hydrodynamic interpolation table, comprises:
performing sequential numbering on interpolation points in the basic hydrodynamic interpolation table;
choosing a number range according to sequential numbers of the interpolation points;
constructing a basic hydrodynamic interpolation table segment based on interpolation points corresponding to the number range;
determining, according to a linearity of the basic hydrodynamic interpolation table segment, whether the basic hydrodynamic interpolation table segment comprises an interpolation point to be eliminated;
when any basic hydrodynamic interpolation table segment comprises an interpolation point to be eliminated, eliminating the interpolation point to be eliminated, to obtain a new basic hydrodynamic interpolation table segment; and
integrating all current basic hydrodynamic interpolation table segments, to obtain the hydrodynamic interpolation table.

2. The method according to claim 1, characterzied in that the step of constructing a basic hydrodynamic interpolation table of the cross section of the riverway according to the topographic data and the hydrodynamic interpolation parameters comprises:
constructing one slice by using every two adjacent scattered points as endpoints according to a sequence of scattered points of the cross section indicated by the topographic data, to obtain slice data corresponding to the cross section of the riverway;
for any water level represented by the hydrodynamic interpolation parameters, determining geometric information corresponding to the slice according to a numeric relationship between the water level and each of two endpoint heights of each slice represented by the slice data;
determining hydraulic element information corresponding to the slice according to the geometric information corresponding to the slice;
integrating hydraulic element information corresponding to all slices, so as to determine hydraulic element interpolation values corresponding to the water level; and
constructing the basic hydrodynamic interpolation table of the cross section of the riverway according to hydraulic element interpolation values corresponding to all water levels of the hydrodynamic interpolation parameters.

3. The method according to claim 2, characterzied in that the step of determining geometric information corresponding to the slice according to a numeric relationship between the water level and each of two endpoint heights of each slice represented by the slice data comprises:
for any slice, if the two endpoint heights of the slice are both less than the water level, determining that a flow passing region of the slice has a trapezoid or rectangle shape;
if the water level is between the two endpoint heights, determining that the flow passing region of the slice has a triangle shape; and
if the two endpoint heights of the slice are both greater than or equal to the water level, determining that the flow passing region of the slice is empty.

4. The method according to claim 1, characterzied in that the step of determining, according to a linearity of the basic hydrodynamic interpolation table segment, whether the basic hydrodynamic interpolation table segment comprises an interpolation point to be eliminated comprises:
constructing a linear equation of the basic hydrodynamic interpolation table segment according to two endpoints of the basic hydrodynamic interpolation table segment;
detecting a deviation between the linear equation and each interpolation point other than the endpoints in the basic hydrodynamic interpolation table segment; and
when deviations between all the interpolation points and the linear equation are all less than a preset threshold, determining that the basic hydrodynamic interpolation table segment comprises interpolation points to be eliminated, and determining the interpolation points other than the endpoints in the basic hydrodynamic interpolation table segment as the interpolation points to be eliminated.

5. The method according to claim 4, characterzied in further comprising:
when a deviation between any interpolation point and the linear equation is not less than the preset threshold:
detecting a maximum deviation between an interpolation point and the linear equation;
determining an interpolation point corresponding to the maximum deviation as a target interpolation point; and
choosing a new number range according to a sequential number corresponding to the target interpolation point, to reconstruct a basic hydrodynamic interpolation table segment.

6. An apparatus for constructing a one-dimensional hydrodynamic model, characterzied by comprising:
an acquisition module, configured to acquire topographic data of a cross section of a riverway and hydrodynamic interpolation parameters;
an interpolation table construction module, configured to construct a hydrodynamic interpolation table of the cross section of the riverway according to the topographic data and the hydrodynamic interpolation parameters, wherein the hydrodynamic interpolation table comprises a water level-water surface width interpolation table, a water level-flow passing cross-sectional area interpolation table, a water level-hydraulic radius interpolation table, and an flow passing cross-sectional area-water level interpolation table; and
a model construction module, configured to construct a one-dimensional hydrodynamic model of the riverway based on the hydrodynamic interpolation table of the cross section of the riverway,
wherein interpolation table construction module is specifically configured to:
construct a basic hydrodynamic interpolation table of the cross section of the riverway according to the topographic data and the hydrodynamic interpolation parameters; and
perform sparse processing on the basic hydrodynamic interpolation table, to obtain the hydrodynamic interpolation table;
the interpolation table construction module is specifically configured to:
perform sequential numbering on interpolation points in the basic hydrodynamic interpolation table;
choose a number range according to sequential numbers of the interpolation points;
construct a basic hydrodynamic interpolation table segment based on interpolation points corresponding to the number range;
determine, according to a linearity of the basic hydrodynamic interpolation table segment, whether the basic hydrodynamic interpolation table segment comprises an interpolation point to be eliminated;
when any basic hydrodynamic interpolation table segment comprises an interpolation point to be eliminated, eliminate the interpolation point to be eliminated, to obtain a new basic hydrodynamic interpolation table segment; and
integrate all current basic hydrodynamic interpolation table segments, to obtain the hydrodynamic interpolation table.

7. An electronic device, characterzied by comprising: at least one processor and a memory, wherein
the memory stores computer executable instructions; and
the at least one processor is configured to execute the computer executable instructions stored in the memory, to cause the at least one processor to perform the method according to any one of claims 1 to 5.

8. A computer-readable storage medium, with computer executable instructions stored therein, characterzied in that the computer executable instructions can be executed by a processor to implement the method according to any one of claims 1 to 5.
